# EUROPÄISCHE PATENTSCHRIFT

(11) **EP 1 340 657 B1**
(45) Veröffentlichungstag und Bekanntmachung des Hinweises auf die Patenterteilung: **09.11.2005**
(21) Anmeldenummer: 03001745.3
(22) Anmeldetag: 28.01.2003
(51) Int. Cl.: B60R 21/26

(54) **Gasgenerator, insbesondere für eine Insassenschutzvorrichtung eines Fahrzeuges**
Gas Generator, in particular for a vehicle occupant protecting apparatus
Générateur de gaz, en particulier pour un dispositif de protection des occupants d'un véhicule

(30) Priorität: 28.02.2002 DE 10208956
(43) Veröffentlichungstag der Anmeldung: 03.09.2003
(73) Patentinhaber: Volkswagen AG, 38436 Wolfsburg (DE)
(72) Erfinder: Grewe, Oliver, 38118 Braunschweig (DE); Hackl, Thomas, 38440 Wolfsburg (DE); Gallinger, Martin, 38124 Braunschweig (DE)
(74) Vertreter: Liebl, Thomas

(56) Entgegenhaltungen:
- DE-A- 19 907 241
- US-A- 5 979 936
- US-B1- 6 206 418

## Beschreibung

Die Erfindung betrifft einen Gasgenerator, insbesondere für eine Insassenschutzvorrichtung eines Fahrzeuges nach dem Oberbegriff des Anspruchs 1.

Bei derzeit im Einsatz befindlichen Gasgeneratoren wird als brennbares gasentwickelndes Material ein Gassatz in fester Form wie z. B. in Tablettenform eingesetzt. Beim Verbrennen dieses Feststoffes zur Erzeugung des zum Aufblasen des Airbags benötigten Gases entsteht als unerwünschtes Nebenprodukt ein verhältnismäßig hoher Schlackeanteil. Aufgrund der Schlackebildung bei der Verbrennung sind meist aufwendige Filter im Gasgenerator nötig, um die Schlacke zurückzuhalten. Dies ist ersichtlich aufwendig und kostenintensiv.

Als Alternative sind Gasgeneratoren mit komprimierten Gasen oder Luft bekannt. Dabei muss für ein ausreichendes Gasvolumen ein sehr hoher Ladedruck am Gasgenerator anliegen, was beim Abströmen des Gases im aktivierten Zustand zu einer Abkühlung aufgrund des expandierenden Gases führt. Meist ist zur Sicherstellung der Funktion des Gasgenerators zusätzlich ein Brennstoff in fester Form vorhanden, der einerseits die Abkühlung kompensiert und andererseits bei seinem Abbrand zusätzliches Gas entsteht. Diese Gasgeneratoren sind entsprechend aufwendig und kostenintensiv in der Herstellung und aufgrund der vorhandenen hohen Drücke ist ein vorsichtiger Umgang geboten.

Daneben sind noch Gasgeneratoren mit einem Gas-Feststoffgemisch als gaserzeugendes Material im Einsatz. Ein derartiger Gasgenerator ist aus der DE 199 07 241 A1 bekannt, bei dem in einem Gasaufnahmeraum wenigstens ein gasförmiges Oxidationsmittel aufgenommen ist, wobei im Gasaufnahmeraum weiter wenigstens ein als Feststoff vorliegendes Reduktionsmittel aufgenommen ist. Das gasförmige Oxidationsmittel ist hier Lachgas, Stickstoffmonoxid oder eine Mischung aus beiden. Als Reduktionsmittel bzw. als Brennstoff sind Polymere aus der Gruppe der Kohlenwasserstoffe eingesetzt. Es können auch sauerstoffhaltige Kohlenwasserstoffe wie z. B. Polyester, Cellulose oder Stärke verwendet werden. Das Reduktionsmittel als Brennstoff wird hier in Form von Pulver, Granulat, Geweben oder porösen Schäumen undefiniert und lose in den Gasaufnahmeraum eingebracht. Dadurch besteht die Gefahr einer nicht vollständigen Verbrennung und Umsetzung des Reduktionsmittels, da es zu lokalen Anreicherungen im Gasaufnahmeraum, z. B. einer Häufchenbildung kommt, die die vollständige rückstandsfreie Verbrennung nicht ermöglicht. Dies geschieht einerseits durch Gravitationskräfte, die eine unerwünschte Verlagerung bzw. Anhäufung des Reduktionsmittels je nach Einbausituation des Gasgenerators bewirken, und andererseits durch im Fahrbetrieb auftretende Beschleunigungskräfte.

Aus der US 5,979,936 A ist ein gattungsgemäßer Gasgenerator bekannt, mit einem gasförmigen Oxidationsmittel, das in wenigstens einem Gasaufnahmeraum aufgenommen ist. Im Gasaufnahmeraum ist weiter wenigstens ein als Feststoff vorliegendes Reduktionsmittel aufgenommen, das als Reduktionssicht mit vorgegebener Reduktionsschichtstärke definiert auf einem Träger im Gasaufnahmeraum aufgebracht ist und mittels des Trägers im Gasaufnahmeraum angeordnet ist zur vollständigen und rückstandsfreien Verbrennung und Umsetzung des Reduktionsmittels. Konkret weist der Gasgenerator einen einzigen Gasaufnahmeraum auf, an dessen Gasaufnahmeraum-Wand das Reduktionsmittel als Reduktionsschicht angeordnet ist. Bei einer Aktivierung des Gasgenerators wird sämtliches im Gasaufnahmeraum angeordnetes Reduktionsmittel sofort verbrannt und in Gas umgesetzt.

Aufgabe der Erfindung ist es, einen Gasgenerator zu schaffen, der auf einfache Weise für eine Vielzahl von möglichen Einsatzsituationen auslegbar ist.

Diese Aufgabe wird mit den Merkmalen des Anspruchs 1 gelöst.

Gemäß Anspruch 1 ist der Gasaufnahmeraum mehrkammrig mit wenigstens zwei Gasaufnahmeraum-Kammern ausgeführt. Im Gasaufnahmeraum ist wenigstens eine zwischen zwei Gasaufnahmeraum-Kammern angeordnete Kammer-Trennwand als Träger der Reduktionsschicht ausgebildet.

Vorteilhaft bei einem derartigen Aufbau des Gasgenerators ist, dass dieser für eine Vielzahl von Einsatzmöglichkeiten verwendet werden kann. Durch die Aufbringung des Reduktionsmittels auf der Kammer-Trennwand kann eine größere Menge an Reduktionsmittel in der Gasaufnahmeraum-Kammer angeordnet werden, was zu einer größeren Menge an entstehendem Gas führt. In konkreten Ausführungen können die wenigstens zwei Gasaufnahmeraum-Kammern in der Art einer Parallelschaltung oder in der Art einer Reihenschaltung angeordnet sein. Zudem kann mit dieser schichtweisen Anbringung des Reduktionsmittels auf einem Träger im Gasaufnahmeraum erreicht werden, dass weder die Gravitationskraft noch Beschleunigungskräfte jedweder Art eine unerwünschte Verlagerung des Reduktionsmittels hervorrufen können, da das Reduktionsmittel in der für die optimale chemische Umsetzung desselben erforderlichen Art und Weise, d. h. von der Menge und der lokalen Anordnung her, definiert mittels dem Träger im Gasaufnahmeraum angeordnet werden kann. Damit ist eine exakt definierbare und gewollte Verbrennung des Reduktionsmittels möglich. Form und Größe des Gasgenerators bzw. die Einbaulage des Gasgenerators in einem Fahrzeug sind weitestgehend frei wählbar.

Bei einer Weiterbildung ist der Träger wenigstens bereichsweise durch eine Gasaufnahmeraum-Wand gebildet und/oder ist der Träger wenigstens bereichsweise in die Gasaufnahmeraum-Wand integriert. Durch die Nutzung der Gasaufnahmeraum-Wand als Träger kann ein zusätzliches Bauteil für den Träger eingespart werden. Die Innenseite der Gasaufnahmeraum-Wand, an die die Reduktionsmittelschicht angebracht werden soll, muss ggf. vor dem Aufbringen der Reduktionsmittelschicht vorbehandelt werden, um ein Anhaften der Reduktionsmittelschicht sicherzustellen. Bei bereits vorgefertigten Trägern mit Reduktionsmittelschichten können diese problemlos an der Innenseite der Gasaufnahmeraum-Wand angeordnet und fixiert werden.

In einer bevorzugten Ausführungsform ist der Träger durch eine Gewebeschicht und/oder eine Matte und/oder eine Faserknäuelschicht und/oder eine poröse Schaumschicht gebildet. Damit ist je nach Form des vorliegenden Reduktionsmittels eine dazu passende Trägerausbildung geschaffen. Die Anbringung bzw. die Anordnung im Gasaufnahmeraum des Gasgenerators beeinflusst ebenfalls die Wahl des Trägermaterials bzw. der Trägerausbildung.

In einer Weiterbildung ist der Träger durch ein Diffusorelement, vorzugsweise eine Diffusorscheibe, gebildet oder weist ein solches auf, in dem wenigstens eine Gasdurchströmöffnung angeordnet ist, die von dem entstehenden Gas durchströmbar ist. Mit Einsatz des Diffusorelements ist die Strömungsrichtung bzw. die Strömungsgeschwindigkeit des entstehenden Gases in gewünschter Weise beeinflussbar. Zusätzlich ist das Diffusorelement, an dem der Träger direkt angebracht ist, als zusätzliche Stabilisierungsmaßnahme des Trägers und somit des Reduktionsmittels einsetzbar. Wird das Reduktionsmittel direkt auf die z. B. Diffusorscheibe aufgebracht wird das Überströmen des Gases nach einem bestimmten, vorgebbaren Umsetzungsgrad des Reduktionsmittels freigegeben.

In einer besonders bevorzugten Ausgestaltung trennt bei einer Aktivierung der Reaktion des Oxidationsmittels mit dem Reduktionsmittel in einer Gasaufnahmeraum-Kammer als Reaktions-Kammer die Kammer-Trennwand die Reaktions-Kammer bis zu einem vorbestimmten und vorgegebenen Reaktionszeitpunkt im Wesentlichen gasdicht von wenigstens einer angrenzenden Gasaufnahmeraum-Kammer ab. Ab dem vorbestimmten und vorgegebenen Reaktionszeitpunkt gibt die Kammer-Trennwand ein Überströmen des entstehenden Gases von der Reaktions-Kammer in die wenigstens eine angrenzende Gasaufnahmeraum-Kammer frei. Durch die im Wesentlichen gegebene anfängliche Gasdichtigkeit der ersten Reaktions-Kammer ist dort ein gewünschter Reaktionsablauf so lange erhalten, bis- zu einem gewünschten und vorgegebenen Reaktionszeitpunkt die Kammer-Trennwand für das entstehende Gas durchlässig wird und somit ein Überströmen des Gases möglich ist. Ist die angrenzende Gasaufnahmeraum-Kammer ebenfalls als Reaktions-Kammer ausgebildet so wird dort die Reaktion des Oxidationsmittels mit dem Reduktionsmittel in der zweiten Reaktions-Kammer in Gang gesetzt. Im Wesentlichen gasdicht bedeutet dabei, dass z.B. wenigstens eine kleine Bohrung vorgesehen ist, durch die im nicht aktivierten Zustand, insbesondere im Hinblick auf Temperaturschwankungen, ein Druckausgleich möglich ist. Im Falle einer Aktivierung sind diese Bohrungen so klein, dass ein Druckaufbau in der jeweiligen Kammer in der gewünschten Weise erfolgt.

Gemäß einer weiteren Ausführungsform sind die wenigstens zwei Gasaufnahmeraum-Kammern als Reaktions-Kammern in der Art einer Parallelschaltung angeordnet. D. h., dass bei einer Aktivierung des Gasgenerators in allen Gasaufnahmeraum-Kammern, die ein Reduktionsmittel beinhalten, zugleich eine Reaktion des Oxidationsmittels mit dem Reduktionsmittel, vorzugsweise durch Deflagration, erfolgt und das daraus entstehende Gas über wenigstens eine in jeder Gasaufnahmeraum-Kammer vorhandene Gasaustrittsöffnung aus dieser ausströmt. Dadurch ist durch die Mehrkammrigkeit eine größere Oberfläche zur Anbringung des Reduktionsmittels geschaffen, was zu einer größeren Menge an entstehenden Gas führt. Bei der zeitgleichen Aktivierung der Reaktionen in allen Reaktions-Kammern bei der Parallelschaltung ist somit auf kleinstem Bauraum eine größtmögliche Gasentwicklung möglich.

In einer besonders bevorzugten Ausgestaltung ist eine zentrale Gasaufnahmeraum-Kammer als Gasausström-Kammer vorgesehen, um die herum im Querschnitt durch den Gasgenerator gesehen wenigstens eine, vorzugsweise mehrere Gasaufnahmeraum-Kammern angeordnet sind. Jede Gasaufnahmeraum-Kammer ist über wenigstens eine Gasaustrittsöffnung mit der Gasausström-Kammer strömungsverbunden, so dass zwischen jeder Reaktions-Kammer und der Gasausström-Kammer ab einem vorbestimmten und vorgegebenen Reaktionszeitpunkt ein Überströmen des entstehenden Gases in die Gasausström-Kammer freigebbar ist. Damit ist mit einer einfachen Anordnung eine funktionelle Art eines Gasgenerators geschaffen, bei dem von jeder Reaktions-Kammer einfach eine Strömungsverbindung zur Gasausström-Kammer herstellbar ist. Von der zentralen Gasausström-Kammer ist eine Weiterleitung in z. B. einen Airbag zum Aufblasen desselben möglich.

Gemäß einer konkreten Ausgestaltung ist der Gasaufnahmeraum des Gasgenerators auf den Querschnitt bezogen in mehrere Kreissegmente, vorzugsweise in vier in etwa gleich große Kreissegmente, als Reaktions-Kammern unterteilt, die durch Kammer-Trennwände als Reaktionskammer-Trennwände voneinander abgetrennt sind. Dadurch ist eine einfache Form geschaffen, die durch ihre kreisförmige Ausbildung sehr innendruckstabil ist. Mit den Reaktionskammer-Trennwänden ist eine zusätzliche Stabilisierung der Zylinderform gegeben.

Bei einer Weiterbildung sind wenigstens eine der Reaktionskammer-Innenwände wenigstens bereichsweise mit dem Reduktionsmittel beschichtet. Mit der Menge des Reduktionsmittels, das in der jeweiligen Reaktions-Kammer angebracht ist, ist die entstehende Menge Gas einstellbar.

In einer alternativen Ausführungsform sind die wenigstens zwei Gasaufnahmeraum-Kammern als Reaktions-Kammern in der Art einer Reihenschaltung hintereinander geschalten. Bei einer Aktivierung des Gasgenerators erfolgt zuerst eine Reaktion des Oxidationsmittels mit dem Reduktionsmittel, vorzugsweise durch Deflagration, in einer ersten Reaktions-Kammer, der wenigstens ein Aktivierungselement, vorzugsweise ein Anzünder, als Reaktionsstarter zugeordnet ist. Bei Erreichen eines vorbestimmten und vorgegebenen Reaktionszeitpunktes ist ein Durchströmen des in der ersten Reaktions-Kammer entstehenden Gases durch wenigstens eine zugeordnete Kammer-Trennwand in wenigstens eine angrenzende Gasaufnahmeraum-Kammer als zweite Reaktions-Kammer freigebbar zum Start der Reaktion des Oxidationsmittels mit dem Reduktionsmittel in dieser zweiten Reaktions-Kammer. Damit ist ein kontinuierlicher Druckaufbau und eine kontinuierliche Gasentwicklung in dem Gasgenerator möglich.

Grundsätzlich ist auch eine Kombination zwischen einer Parallelschaltung und einer Reihenschaltung möglich. Beispielsweise kann zeitgleich in zwei Reaktions-Kammern parallel die Aktivierung der Reaktion erfolgen und von diesen beiden Reaktions-Kammern ein Überströmen ab einem bestimmten vorgegebenen Reaktionszeitpunkt in eine dritte Reaktions-Kammer erfolgen.

In einer bevorzugten Weiterbildung ist eine Vielzahl von aneinander angrenzenden Reaktions-Kammern vorgesehen. Es erfolgt ein Durchströmen des entstehenden Gases durch wenigstens eine zugeordnete Kammer-Trennwand ab einem vorbestimmten und vorgegebenen Reaktionszeitpunkt und somit ist die Reaktion des Oxidationsmittels mit dem Reduktionsmittel in der Art einer Kettenreaktion für jede weitere angrenzende Reaktions-Kammer weiterführbar. Damit ist eine funktionssichere Art für die Reihenschaltung von mehreren Reaktions-Kammern in einem Gasgenerator geschaffen. Durch Anzahl und Größe der Reaktions-Kammern bzw. durch die Menge an vorhandenem Reduktionsmittel ist die Menge des entstehenden Gases einstellbar.

In einer besonders bevorzugten Ausgestaltung ist der Gasgenerator zylindrisch ausgebildet und es sind mehrere, vorzugsweise drei, Reaktions-Kammern bezogen auf die zylindrische Form axial ausgerichtet hintereinander angeordnet. Der an einem Start-Zylinderende angeordneten Reaktions-Kammer ist wenigstens ein Aktivierungselement, vorzugsweise ein Anzünder, als Reaktionsstarter zugeordnet. Am gegenüberliegenden Ausström-Zylinderende ist benachbart zur letzten Reaktions-Kammer eine Gasausström-Kammer angeordnet, aus der über wenigstens eine Gasausströmöffnung das entstehende Gas ausblasbar ist. Jede Reaktions-Kammer ist mit einer Reaktionskammer-Trennwand gegenüber der nächstfolgend benachbarten Kammer beim Start der jeweiligen Reaktion weitestgehend gasdicht abgeschlossen. Damit ist eine einfache und funktionelle Anordnung der einzelnen Reaktions-Kammern für eine Reihenschaltung geschaffen. Die Reaktionskammern-Trennwände sind jeweils so ausgelegt, dass sie in ihrer Form und Größe genau dem Querschnitt des Zylinders entsprechen. Aus der letzten Reaktions-Kammer strömt das entstandene Gas in die Gasausström-Kammer, die am Ausström-Zylinderende angeordnet ist, und von dort ist das Gas z. B. in einen Airbag zur Entfaltung dieses weiterleitbar.

Gemäß einer Weiterbildung ist das Reduktionsmittel einseitig auf die Reaktionskammer-Trennwände aufgebracht dergestalt, dass die Reduktionsmittelseite jeweils der Kammer zugeordnet ist, in der die Reaktion des Oxidationsmittels mit dem Reduktionsmittel zuerst abläuft. Damit ist das Reduktionsmittel jeweils in der durch die Zylinderform und Anordnung der Reaktionskammer-Trennwände vorgegebenen Strömungsrichtung des entstehenden Gases angeordnet. Damit ist ein sicherer Ablauf der Kettenreaktion gewährleistet.

In einer weiteren Ausgestaltung ist zur Ausbildung eines definierten Volumens in den Reaktions-Kammern die Reaktionskammer-Trennwand mittels wenigstens eines Abstandhalters in einem definierten Abstand zueinander gehalten sind. Dadurch ist einerseits eine zusätzliche Sicherung der Reaktionskammer-Trennwände durch die Abstandshalter gegeben und andererseits ist durch die definierten Räume für das gasförmige Oxidationsmittel eine gewünschte Reaktion des Oxidationsmittels mit dem Reduktionsmittel aufgrund der Mengenverhältnisse der beiden Substanzen genau einstellbar.

In einer weiteren alternativen Ausführungsform ist eine zentrale Gasaufnahmeraum-Kammer als Gasausström-Kammer vorgesehen, um die herum im Querschnitt durch den Gasgenerator gesehen wenigstens zwei, vorzugsweise mehrere Gasaufnahmeraum-Kammern angeordnet sind. Jede Gasaufnahmeraum-Kammer, die als Reaktions-Kammer ausgebildet ist, ist mit wenigstens einer benachbarten Reaktions-Kammer über wenigstens eine Gasüberströmöffnung so strömungsverbunden, dass ab einem vorbestimmten und vorgegebenen Reaktionszeitpunkt ein Überströmen des entstehenden Gases in die benachbarte Reaktions-Kammer freigebbar ist. Aus der gemäß des zeitlichen Ablaufs der Kettenreaktion letzten Reaktions-Kammer ist ab einem vorbestimmten und vorgegebenen Reaktionszeitpunkt ein Überströmen des entstehenden Gases in die Gasausström-Kammer freigebbar. Bei dieser Anordnung der Reaktions-Kammern um die Gasausström-Kammer herum erfolgt die Kettenreaktion von Reaktions-Kammer zu Reaktions-Kammer um die Gasausström-Kammer herum und von der letzten Reaktions-Kammer strömt das entstehende Gas in die Gasausström-Kammer und von dort z. B. in einen Airbag.

Gemäß einer Weiterbildung ist der Gasaufnahmeraum des Gasgenerators auf den Querschnitt bezogen in mehrere Kreissegmente, vorzugsweise in vier in etwa gleich große Kreissegmente, als Reaktions-Kammern unterteilt, die durch Kammer-Trennwände als Reaktionskammer-Trennwände voneinander abgetrennt sind. Durch die Form des Gasaufnahmeraumes und die Anordnung der Reaktionskammer-Trennwände im Gasaufnahmeraum ist ein funktioneller und stabiler Gasgenerator geschaffen. In den Reaktionskammer-Trennwänden sind die Gasüberströmöffnungen vorgesehen, damit eine Kettenreaktion zwischen den einzelnen Reaktions-Kammern stattfinden kann.

Bei einer Weiterbildung ist wenigstens eine der Reaktionskammer-Innenwände jeder Reaktions-Kammer wenigstens bereichsweise mit dem Reduktionsmittel beschichtet. Damit ist die Funktion der Reihenschaltung bzw. der Kettenreaktion zwischen Oxidationsmittel und dem Reduktionsmittel gewährleistet. Mit der Menge an eingebrachten bzw. beschichteten Reduktionsmittel in den einzelnen Reaktions-Kammern ist die Menge des erzeugten Gases einstellbar.

In einer bevorzugten Ausgestaltung ist die jeweilige Gasüberströmöffnung und/oder Gasaustrittsöffnung so mit einer Reduktionsmittelschicht verschlossen, dass der Gasübertritt erst nach einer im Verlauf der Reaktion erfolgenden Umsetzung des Reduktionsmittels in diesem Bereich freigebbar ist. Damit ist mit der Reduktionsmittelschicht die Gasdichtigkeit der jeweiligen Reaktions-Kammer hergestellt. Ein zusätzliches Bauteil, wie z. B. eine Membran kann entfallen.

In einer bevorzugten Ausführungsform ist das gasförmige Oxidationsmittel Lachgas. Lachgas ist relativ sicher bei einem niedrigen Ladedruck verarbeitbar. Bis zu einer Temperatur von in etwa 200° C liegt Lachgas als Inertgas vor, wodurch stille Oxidationsprozesse auch bei einer Hochtemperaturlagerung verhindert werden. Ein Teil des Oxidationsmittels soll dabei stets gasförmig vorliegen. Ein zusätzlicher Teil kann jedoch auch flüssig und/oder als Feststoff vorliegen.

Gemäß einer weiteren Ausgestaltung ist das als Feststoff vorliegende Reduktionsmittel Mehl. Damit ist ein einfaches und billiges Material, das aber dennoch den geforderten Ansprüchen bzw. Anforderungen genügt, eingesetzt.

In einer bevorzugten Weiterbildung ist das als Feststoff vorliegende Reduktionsmittel auf den Träger vorzugsweise mit Stärke aufgeklebt. Damit ist eine Positionsveränderung des Reduktionsmittels vor einer Aktivierung des Gasgenerators verhindert. Grundsätzlich ist jede Art von Aufbringung bzw. Beschichtung des Reduktionsmittels auf den Träger möglich.

Bei einer weiteren Ausführungsform ist das als Feststoff vorliegende Reduktionsmittel auf den Träger eingeschweißt. Dies kann als Alternative zum Kleben zur Positionsfixierung des Reduktionsmittels auf dem Träger eingesetzt werden.

Anhand einer Zeichnung wird die Erfindung näher erläutert.

Es zeigen:
- Fig.1: eine schematische Darstellung eines Längsschnitts durch einen Gasaufnahmeraum eines Gasgenerators mit in Reihe geschaltenen Reaktions-Kammern,
- Fig. 2: eine schematische Darstellung eines Schnitts durch eine Reaktionskammer-Trennwand,
- Fig. 3: eine schematische Darstellung einer Diffusorscheibe,
- Fig. 4: eine schematische Darstellung eines Schnitts durch einen Gasaufnahmeraum mit parallel geschaltenen Reaktions-Kammem, und
- Fig. 5: eine schematische Darstellung eines Schnitts durch einen Gasaufnahmeraum mit einer alternativen Variante von in Reihe geschaltenen Reaktions-Kammern.

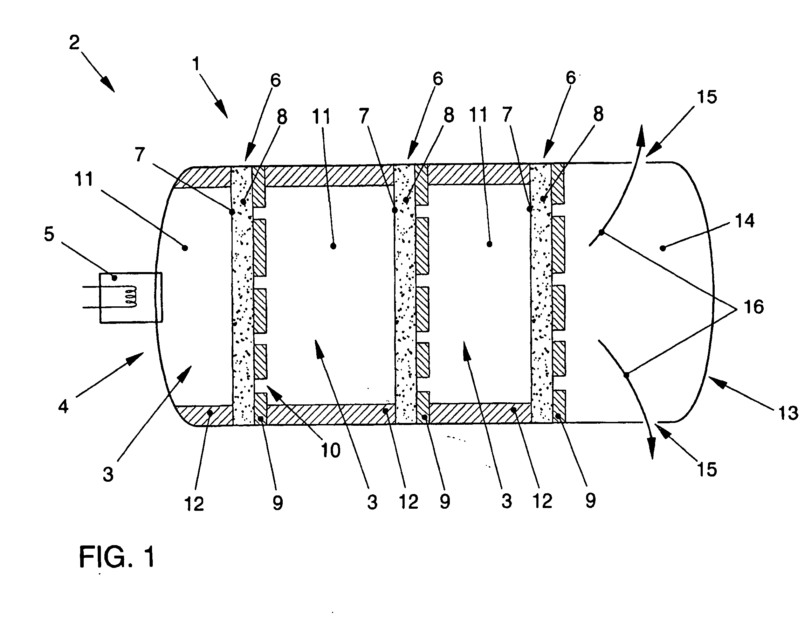

In Fig. 1 ist schematisch ein Längsschnitt durch einen Gasaufnahmeraum 1 eines Gasgenerators 2 mit in Reihe geschaltenen Reaktions-Kammern 3 dargestellt. Die Grundform des Gasaufnahmeraumes 1 ist zylindrisch, wobei an einem Start-Zylinderende 4 ein Anzünder 5 angeordnet ist. Im Inneren des Gasaufnahmeraumes sind drei Reaktionskammer-Trennwände 6 angeordnet, die in ihrer Form und Größe jeweils dem Querschnitt des Gasaufnahmeraumes 1 entsprechen. Jede Reaktionskammer-Trennwand 6 ist durch einen Träger 7, der mit einem Reduktionsmittel 8 beschichtet ist, gebildet. An dem Träger 7 ist jeweils eine Diffusorscheibe 9 angebracht. In den Diffusorscheiben 9 sind eine Mehrzahl von Gasdurchströmöffnungen 10 angeordnet. Das Reduktionsmittel 8 auf dem Träger 7 ist einseitig auf die jeweilige Reaktionskammer-Trennwand 6 aufgebracht, so dass die Reduktionsmittelseite jeweils der Kammer zugeordnet ist, in der die Reaktion eines gasförmigen Oxidationsmittels 11 mit dem Reduktionsmittel 8 zuerst abläuft. Das Oxidationsmittel 11 befindet sich in jeder der drei Reaktions-Kammern 3. Ein Abstandshalter 12 hält die Reaktionskammer-Trennwände 6 in einem definierten Abstand zum Start-Zylinderende 4 bzw. hält einen definierten Abstand zwischen den Reaktionskammer-Trennwänden 6. An einem Ausström-Zylinderende 13 ist im Anschluss direkt benachbart an die letzte Reaktions-Kammer 3 eine Gasausström-Kammer 14 angeordnet. In dieser sind zwei Gasausströmöffnungen 15 angeordnet, durch die das entstehende Gas ausblasbar ist. Dies ist mit den Gasstrompfeilen 16 in Fig. 1 eingezeichnet.

Bei einer Aktivierung des Gasgenerators 2 wird der Anzünder 5 gezündet, was den Start der Reaktion des Oxidationsmittels 11 mit dem Reduktionsmittel 8, das auf dem Träger 7 aufgebracht ist, bewirkt. Ab einem vorbestimmten und vorgegebenen Reaktionszeitpunkt in der ersten Reaktions-Kammer 3 durchströmt das entstehende Gas durch die Gasdurchströmöffnungen 10 der Diffusorscheibe 9 in die zweite Reaktions-Kammer 3 und startet dort die Reaktion des Oxidationsmittels 11 mit dem Reduktionsmittel 8. Dies wiederholt sich beim Übergang von der zweiten Reaktions-Kammer 3 in die dritte Reaktions-Kammer 3. Ab einem vorbestimmten und vorgegebenen Reaktionszeitpunkt in der dritten Reaktions-Kammer 3 strömt das Gas durch die dritte Diffusorscheibe 9 in die Gasausström-Kammer 14 und von dort durch die Gasausströmöffnungen 15 z. B. in einen Airbag, wodurch dieser entfaltet wird.

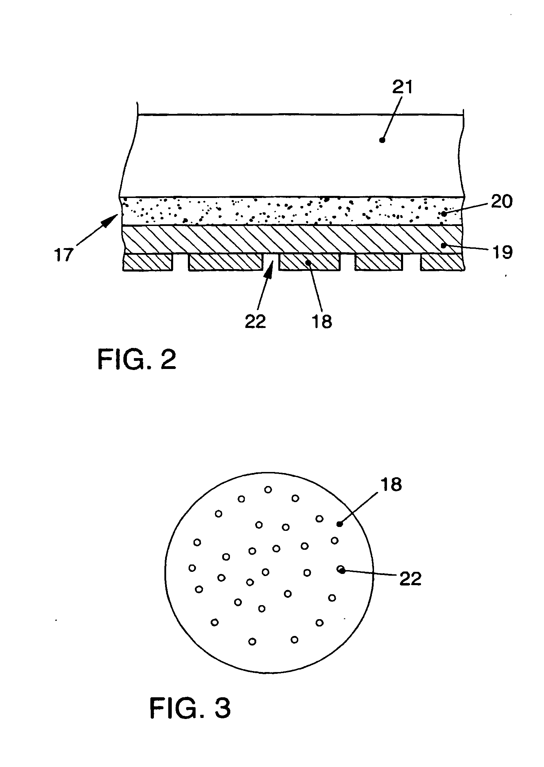

In Fig. 2 ist schematisch ein Schnitt durch eine Reaktionskammer-Trennwand 17 dargestellt. Auf einer Diffusorscheibe 18 ist ein Gewebe 19 als Träger für ein Reduktionsmittel 20 angeordnet. Über dem Reduktionsmittel 20 befindet sich ein gasförmige Oxidationsmittel 21. In der Diffusorscheibe 18 sind eine Mehrzahl von Gasdurchströmöffnungen 22 angeordnet, durch die ab einem vorbestimmten und vorgegebenen Reaktionszeitpunkt das entstehende Gas in die benachbarte Gasaufnahmeraum-Kammer durchströmen kann.

In Fig. 3 ist die Diffusorscheibe 18 in einer Draufsicht schematisch dargestellt. Dabei sind die Gasdurchströmöffnungen 22 in der Diffusorscheibe 18 zu erkennen. Je nach Lage und Anzahl der Gasdurchströmöffnungen 22 ist ein gewünschtes Gasströmverhalten einstellbar.

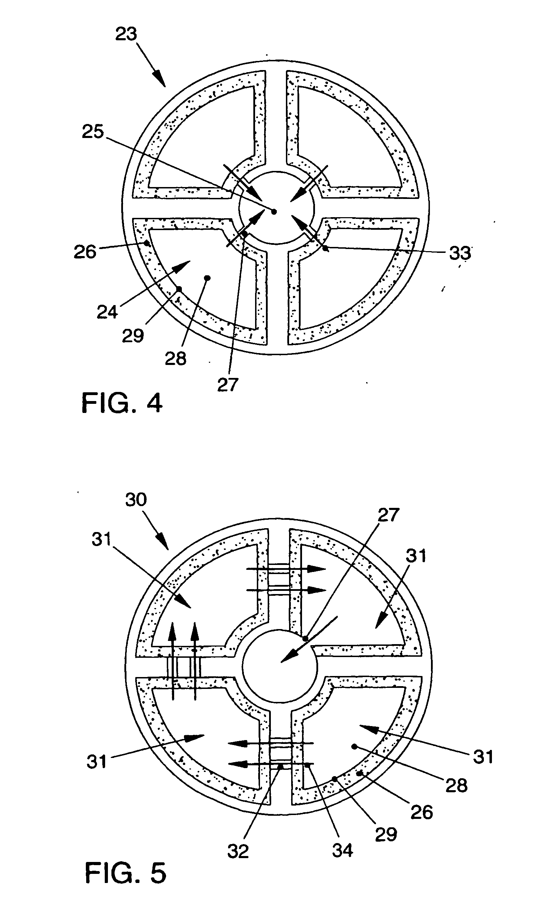

In Fig. 4 ist schematisch ein Schnitt durch einen Gasaufnahmeraum 23 mit parallel geschaltenen Reaktions-Kammern 24 dargestellt. Im Querschnitt ist der Gasaufnahmeraum 23 kreisförmig ausgebildet, wobei zentral eine Gasausström-Kammer 25 angeordnet ist. Um diese Gasausström-Kammer 25 sind die vier Reaktions-Kammern 24 ausgebildet, die jeweils in der Form eines Kreissegments An der Innenseite der Reaktions-Kammern 24 ist ein Reduktionsmittel 26, das auf einem Träger 29 fixiert ist, angeordnet. Jede Reaktions-Kammer 24 weist eine Gasaustrittsöffnung 27 auf, mit der eine Strömungsverbindung zwischen der Reaktions-Kammer 24 und der Gasausström-Kammer 25 herstellbar ist. Die Gasaustrittsöffnung 27 einer jeden Reaktions-Kammer 24 ist zu Beginn der Reaktion eines Oxidationsmittels 28 mit einem Reduktionsmittel. 26 mit einem Träger 29 gasdicht verschlossen. Ab einem vorbestimmten und vorgegebenen Reaktionszeitpunkt ist ein Überströmen des entstehenden Gases in die Gasausström-Kammer 25 durch den Träger 29 möglich. Die Gasströme sind mit Gasstrompfeilen 33 eingezeichnet. Zu diesem Zeitpunkt ist das Reduktionsmittel 26 im Verlauf der Reaktion soweit umgesetzt, dass die anfängliche Gasdichtigkeit entfallen ist und ein überströmen des entstehenden Gases möglich ist. Grundsätzlich kann die anfängliche Gasdichtigkeit der Reaktions-Kammern 24 auch z. B. mit einer Membran ausgeführt sein, die bei einem bestimmten, vorgebbaren Druckniveau zerstörbar ist.

In Fig. 5 ist schematisch ein Gasaufnahmeraum 30 mit in Reihe geschaltenen Reaktions-Kammern 31 dargestellt. Der geometrische Aufbau des Gasaufnahmeraums 30 entspricht dem Gasaufnahmeraum 23 der Fig. 4. Im Gegensatz zu dem in Fig. 4 dargestellten Gasgenerator wird die Reaktion bei dem Gasgenerator in Fig. 5 in einer ersten Reaktions-Kammer 31 gestartet und ab einem vorbestimmten und vorgegebenen Reaktionszeitpunkt ist ein Überströmen des entstehenden Gases in die benachbarte Reaktions-Kammer 31 über Gasüberströmöffnungen 32 möglich. Dadurch wird die Reaktion des Oxidationsmittels 28 mit dem Reduktionsmittel 26 in der zweiten Reaktions-Kammer 31 in Gang gesetzt. Dies wiederholt sich in der dritten und vierten Reaktions-Kammer 31. Von dort strömt das entstehende Gas über die Gasaustrittsöffnung 27 in die Gasausström-Kammer 25. Die Gasströme sind mit Gasstrompfeilen 34 eingezeichnet. Bei jedem Überströmvorgang von Reaktions-Kammer 31 zu Reaktions-Kammer 31 bzw. beim Einströmen des entstehenden Gases in die Gasausström-Kammer 25 ist die anfängliche Gasdichtigkeit der einzelnen Reaktions-Kammern 31 mit dem auf dem Träger 29 angebrachten Reduktionsmittel 26 hergestellt. Im Verlauf der Reaktion des Oxidationsmittels 28 mit dem Reduktionsmittel 26 und der damit verbundenen Umsetzung des Reduktionsmittels 26 in gasförmige Reaktionsprodukte werden die jeweiligen Gasüberströmöffnungen 32 bzw. die Gasaustrittsöffnung 27 freigegeben. Alternativ kann auch hier eine Membran zur Aufrechterhaltung der anfänglichen Gasdichtigkeit der einzelnen Reaktions-Kammern 31 verwendet werden.

### BEZUGSZEICHENLISTE

- 1: Gasaufnahmeraum
- 2: Gasgenerator
- 3: Reaktions-Kammer
- 4: Start-Zylinderende
- 5: Anzünder
- 6: Reaktionskammer-Trennwand
- 7: Träger
- 8: Reduktionsmittel
- 9: Diffusorscheibe
- 10: Gasdurchströmöffnung
- 11: Oxidationsmittel
- 12: Abstandshalter
- 13: Ausström-Zylinderende
- 14: Gasausström-Kammer
- 15: Gasausströmöffnung
- 16: Gasstrompfeil
- 17: Reaktionskammer-Trennwand
- 18: Diffusorscheibe
- 19: Gewebe
- 20: Reduktionsmittel
- 21: Oxidationsmittel
- 22: Gasdurchströmöffnung
- 23: Gasaufnahmeraum
- 24: Reaktions-Kammer
- 25: Gasausström-Kammer
- 26: Reduktionsmittel
- 27: Gasaustrittsöffnung
- 28: Oxidationsmittel
- 29: Träger
- 30: Gasaufnahmeraum
- 31: Reaktions-Kammer
- 32: Gasüberströmöffnung
- 33: Gasstrompfeil
- 34: Gasstrompfeil

## Patentansprüche

1. Gasgenerator, insbesondere für eine Insassenschutzvorrichtung eines Fahrzeuges, mit wenigstens einem gasförmigen Oxidationsmittel (11, 21, 28), das in wenigstens einem Gasaufnahmeraum (1, 23, 30) aufgenommen ist, wobei im Gasaufnahmeraum (1, 23, 30) weiter wenigstens ein als Feststoff vorliegendes Reduktionsmittel (8, 20, 26) aufgenommen ist,
wobei das wenigstens eine Reduktionsmittel (8, 20, 26) als Reduktionsschicht mit vorgegebener Reduktionsschichtstärke definiert auf einem Träger (7, 19, 29) im Gasaufnahmeraum (1, 23, 30) aufgebracht und mittels dem Träger (7, 19, 29) im Gasaufnahmeraum (1, 23, 30) angeordnet ist zur vollständigen und rückstandsfreien Verbrennung und Umsetzung des Reduktionsmittels (8, 20, 26),
**dadurch gekennzeichnet,**
**dass** der Gasaufnahmeraum (1, 23, 30) mehrkammrig mit wenigstens zwei Gasaufnahmeraum-Kammern (3, 24, 31) ausgeführt ist, und
**dass** im Gasaufnahmeraum (1, 23, 30) wenigstens eine zwischen zwei Gasaufnahmeraum-Kammern (3, 24, 31) angeordnete Kammer-Trennwand (6, 17) als Träger (7, 29) der Reduktionsschicht ausgebildet ist.

2. Gasgenerator nach Anspruch 1, **dadurch gekennzeichnet, dass** der Träger (7, 19, 29) wenigstens bereichsweise durch eine Gasaufnahmeraum-Wand gebildet ist und/oder der Träger (7, 19, 29) wenigstens bereichsweise in die Gasaufnahmeraum-Wand integriert ist.

3. Gasgenerator nach Anspruch 1 oder 2, **dadurch gekennzeichnet, dass** der Träger durch eine Gewebeschicht (19) und/oder eine Matte und/oder eine Faserknäuelschicht und/oder eine poröse Schaumschicht gebildet ist.

4. Gasgenerator nach einem der Ansprüche 1 bis 3, **dadurch gekennzeichnet, dass** der Träger (7) durch ein Diffusorelement, vorzugsweise eine Diffusorscheibe (9, 18), gebildet ist oder ein solches aufweist, in dem wenigstens eine Gasdurchströmöffnung angeordnet ist, die von dem entstehenden Gas durchströmbar ist.

5. Gasgenerator nach einem der Ansprüche 1 bis 4, **dadurch gekennzeichnet, dass** bei einer Aktivierung der Reaktion des Oxidationsmittels (11, 21, 28) mit dem Reduktionsmittel (8, 20, 26) in einer Gasaufnahmeraum-Kammer als Reaktions-Kammer (3, 24, 31) die Kammer-Trennwand (6, 17) die Reaktions-Kammer (3, 24, 31) bis zu einem vorbestimmten und vorgegebenen Reaktionszeitpunkt im wesentlichen gasdicht von wenigstens einer angrenzenden Gasaufnahmeraum-Kammer (3, 24, 31, 14, 25) trennt und ab dem vorbestimmten und vorgegebenen Reaktionszeitpunkt ein Überströmen des entstehenden Gases von der Reaktions-Kammer (3, 24, 31) in die wenigstens eine angrenzende Gasaufnahmeraum-Kammer (3, 24, 31, 14, 25) freigibt.

6. Gasgenerator nach einem der Ansprüche 1 bis 5, **dadurch gekennzeichnet, dass** die wenigstens zwei Gasaufnahmeraum-Kammern als Reaktions-Kammern (24) in der Art einer Parallelschaltung angeordnet sind dergestalt, dass bei einer Aktivierung des Gasgenerators in allen Gasaufnahmeraum-Kammern (24), die ein Reduktionsmittel beinhalten, zugleich eine Reaktion des Oxidationsmittels (28) mit dem Reduktionsmittel (26), vorzugsweise durch Deflagration, erfolgt und das daraus entstehende Gas über wenigstens eine in jeder Gasaufnahmeraum-Kammer (24) vorhandene Gasaustrittsöffnung (27) aus dieser ausströmt.

7. Gasgenerator nach Anspruch 6, **dadurch gekennzeichnet,**
**dass** eine zentrale Gasaufnahmeraum-Kammer als Gasausström-Kammer (25) vorgesehen ist, um die herum im Querschnitt durch den Gasgenerator gesehen wenigstens eine, vorzugsweise mehrere Gasaufnahmeraum-Kammern (24) angeordnet sind, und
**dass** jede Gasaufnahmeraum-Kammer (24) mit der Gasausström-Kammer (25) über wenigstens eine Gasaustrittsöffnung (27) strömungsverbunden ist, so dass zwischen jeder Reaktions-Kammer (24) und der Gasausström-Kammer (25) ab einem vorbestimmten und vorgegebenen Reaktionszeitpunkt ein Überströmen des entstehenden Gases in die Gasausström-Kammer (25) freigebbar ist.

8. Gasgenerator nach Anspruch 7, **dadurch gekennzeichnet, dass** der Gasaufnahmeraum (23) des Gasgenerators auf den Querschnitt bezogen in mehrere Kreissegmente, vorzugsweise in vier in etwa gleich große Kreissegmente, als Reaktions-Kammern (24) unterteilt ist, die durch Kammer-Trennwände als Reaktionskammer-Trennwände voneinander abgetrennt sind.

9. Gasgenerator nach Anspruch 8, **dadurch gekennzeichnet, dass** wenigstens eine der Reaktionskammer-Innenwände wenigstens bereichsweise mit dem Reduktionsmittel (26) beschichtet sind.

10. Gasgenerator nach einem der Ansprüche 1 bis 5, **dadurch gekennzeichnet,**
**dass** die wenigstens zwei Gasaufnahmeraum-Kammern als Reaktions-Kammern (3, 31) in der Art einer Reihenschaltung hintereinander geschalten sind dergestalt, dass bei einer Aktivierung des Gasgenerators zuerst eine Reaktion des Oxidationsmittels (11, 28) mit dem Reduktionsmittel (8, 26), vorzugsweise durch Deflagration, in einer ersten Reaktions-Kammer (3, 31) erfolgt, der wenigstens ein Aktivierungselement, vorzugsweise ein Anzünder, als Reaktionsstarter zugeordnet ist, und
**dass** bei Erreichen eines vorbestimmten und vorgegebenen Reaktionszeitpunktes ein Durchströmen des in der ersten Reaktions-Kammer (3, 31) entstehenden Gases durch wenigstens eine zugeordnete Kammer-Trennwand in wenigstens eine angrenzende Gasaufnahmeraum-Kammer als zweite Reaktions-Kammer (3, 31) freigebbar ist zum Start der Reaktion des Oxidationsmittels (11, 28) mit dem Reduktionsmittel (8, 26) in dieser zweiten Reaktions-Kammer (3, 31).

11. Gasgenerator nach Anspruch 10, **dadurch gekennzeichnet, dass** eine Vielzahl von aneinander angrenzenden Reaktions-Kammern (31) vorgesehen ist dergestalt, dass zwischen wenigstens jeweils zwei Reaktions-Kammern ein Durchströmen des entstehenden Gases durch wenigstens eine zugeordnete Kammer-Trennwand ab einem vorbestimmten und vorgegebenen Reaktionszeitpunkt erfolgt und somit die Reaktion des Oxidationsmittels mit dem Reduktionsmittel in der Art einer Kettenreaktion für jede weitere angrenzende Reaktions-Kammer weiterführbar ist.

12. Gasgenerator nach Anspruch 10 oder 11, **dadurch gekennzeichnet,**
**dass** der Gasgenerator (2) zylindrisch ausgebildet ist,
**dass** mehrere, vorzugsweise drei, Reaktions-Kammern (3) bezogen auf die zylindrische Form axial ausgerichtet hintereinander angeordnet sind,
**dass** der an einem Start-Zylinderende (4) angeordneten Reaktions-Kammer (3) das wenigstens eine Aktivierungselement, vorzugsweise ein Anzünder (5), als Reaktionsstarter zugeordnet ist,
**dass** am gegenüberliegenden Ausström-Zylinderende (13) benachbart zur letzten Reaktions-Kammer (3) eine Gasausström-Kammer (14) angeordnet ist, aus der über wenigstens eine Gasausströmöffnung (15) das entstehende Gas ausblasbar ist, und dass jede Reaktions-Kammer (3) mit einer Reaktionskammer-Trennwand (6) gegenüber der nächstfolgend benachbarten Kammer (3) beim Start der jeweiligen Reaktion weitestgehend gasdicht abgeschlossen ist.

13. Gasgenerator nach einem der Ansprüche 10 bis 12, **dadurch gekennzeichnet, dass** das Reduktionsmittel (8) einseitig auf die Reaktionskammer-Trennwände (6) aufgebracht ist dergestalt, dass die Reduktionsmittelseite jeweils der Kammer (3) zugeordnet ist, in der die Reaktion des Oxidationsmittels (11) mit dem Reduktionsmittel (8) zuerst abläuft.

14. Gasgenerator nach einem der Ansprüche 10 bis 13, **dadurch gekennzeichnet, dass** zur Ausbildung eines definierten Volumens in den Reaktions-Kammern (3) die Reaktionskammer-Trennwande (6) mittels wenigstens eines Abstandhalters (12) in einem definierten Abstand zueinander gehalten sind.

15. Gasgenerator nach Anspruch 10 oder 11, **dadurch gekennzeichnet,**
**dass** eine zentrale Gasaufnahmeraum-Kammer als Gasausström-Kammer (30) vorgesehen ist, um die herum im Querschnitt durch den Gasgenerator gesehen wenigstens zwei, vorzugsweise mehrere Gasaufnahmeraum-Kammern (31) angeordnet sind,
**dass** jede Gasaufnahmeraum-Kammer, die als Reaktions-Kammer (31) ausgebildet ist, mit wenigstens einer benachbarten Reaktions-Kammer (31) über wenigstens eine Gasüberströmöffnung (32) so strömungsverbunden ist, dass ab einem vorbestimmten und vorgegebenen Reaktionszeitpunkt ein Überströmen des entstehenden Gases in die benachbarte Reaktions-Kammer (31) freigebbar ist, und
**dass** aus der gemäß des zeitlichen Ablaufs der Kettenreaktion letzten Reaktions-Kammer ab einem vorbestimmten und vorgegebenen Reaktionszeitpunkt ein Überströmen des entstehenden Gases in die Gasausström-Kammer (25) freigebbar ist.

16. Gasgenerator nach Anspruch 15, **dadurch gekennzeichnet, dass** der Gasaufnahmeraum (30) des Gasgenerators auf den Querschnitt bezogen in mehrere Kreissegmente, vorzugsweise in vier in etwa gleich große Kreissegmente, als Reaktions-Kammern (31) unterteilt ist, die durch Kammer-Trennwände als Reaktionskammer-Trennwände voneinander abgetrennt sind.

17. Gasgenerator nach Anspruch 16, **dadurch gekennzeichnet, dass** wenigstens eine der Reaktionskammer-Innenwände jeder Reaktions-Kammer (31) wenigstens bereichsweise mit dem Reduktionsmittel (26) beschichtet ist.

18. Gasgenerator nach einem der Ansprüche 1 bis 17, **dadurch gekennzeichnet, dass** die jeweilige Gasüberströmöffnung (32) und/oder Gasaustrittsöffnung (27) so mit einer Reduktionsmittelschicht (29) verschlossen ist, dass der Gasübertritt erst nach einer im Verlauf der Reaktion erfolgenden Umsetzung des Reduktionsmittels in diesem Bereich freigebbar ist.

19. Gasgenerator nach einem der Ansprüche 1 bis 18, **dadurch gekennzeichnet, dass** das gasförmige Oxidationsmittel (11, 21, 28) Lachgas ist.

20. Gasgenerator nach einem der Ansprüche 1 bis 19, **dadurch gekennzeichnet, dass** zusätzlich zum gasförmigen Oxidationsmittel (11, 21, 28) ein flüssiges und/oder festes Oxidationsmittel vorgesehen ist.

21. Gasgenerator nach einem der Ansprüche 1 bis 20, **dadurch gekennzeichnet, dass** das als Feststoff vorliegende Reduktionsmittel (8, 20, 26) Mehl ist.

22. Gasgenerator nach einem der Ansprüche 1 bis 21, **dadurch gekennzeichnet, dass** das als Feststoff vorliegende Reduktionsmittel (8, 20, 26) auf den Träger (7, 29) vorzugsweise mit Stärke, aufgeklebt ist.

23. Gasgenerator nach einem der Ansprüche 1 bis 22, **dadurch gekennzeichnet, dass** das als Feststoff vorliegende Reduktionsmittel (8, 20, 26) auf den Träger (7, 29) eingeschweißt ist.

## Claims

1. Gas generator, in particular for a vehicle occupant protecting apparatus, having at least one gaseous oxidizing agent (11, 21, 28), which is held in at least one gas holding space (1, 23, 30), at least one reducing agent (8, 20, 26) which is in the form of a solid also being held in the gas holding space (1, 23, 30),
the at least one reducing agent (8, 20, 26) being applied in a defined way as a reducing layer of preset reducing layer thickness to a carrier (7, 19, 29) in the gas holding space (1, 23, 30) and being arranged in the gas holding space (1, 23, 30) by means of the carrier (7, 19, 29) so as to effect complete combustion and conversion of the reducing agent (8, 20, 26) without leaving any residues,
**characterized**
**in that** the gas holding space (1, 23, 30) is of multi-chamber design with at least two gas holding space chambers (3, 24, 31), and
**in that** at least one chamber partition (6, 17) arranged between two gas holding space chambers (3, 24, 31) is designed as a carrier (7, 29) for the reducing layer in the gas holding space (1, 23, 30).

2. Gas generator according to Claim 1, **characterized**
**in that** the carrier (7, 19, 29), at least in regions, is formed by a gas holding space wall, and/or the carrier (7, 19, 29), at least in regions, is integrated in the gas holding space wall.

3. Gas generator according to Claim 1 or 2, **characterized in that** the carrier is formed by a woven fabric layer (19) and/or a mat and/or a fibre balling layer and/or a porous foam layer.

4. Gas generator according to one of Claims 1 to 3, **characterized in that** the carrier (7) is formed by a diffuser element, preferably a diffuser disc (9, 18) or has a diffuser element of this type, in which there is arranged at least one gas through-flow opening through which the gas which is formed can flow.

5. Gas generator according to one of Claims 1 to 4, **characterized in that** when the reaction of the oxidizing agent (11, 21, 28) with the reducing agent (8, 20, 26) in a gas holding space chamber as reaction chamber (3, 24, 31) is activated, the chamber partition (6, 17) separates the reaction chamber (3, 24, 31) in a substantially gastight manner from at least one adjacent gas holding space chamber (3, 24, 31, 14, 25) up until a predetermined and preset reaction instant, and allows the gas which is formed to flow from the reaction chamber (3, 24, 31) into the at least one adjacent gas holding space chamber (3, 24, 31, 14, 25) from the predetermined and preset reaction instant onwards.

6. Gas generator according to one of Claims 1 to 5, **characterized in that** the at least two gas holding space chambers are arranged as reaction chambers (24) in the form of a parallel connection, in such a manner that when the gas generator is activated, a reaction of the oxidizing agent (28) with the reducing agent (26), preferably by deflagration, takes place in all the gas holding space chambers (24) which contain a reducing agent simultaneously, and the gas which is formed from this reaction flows out of each gas holding space chamber (24) via at least one gas outlet opening (27) which is present therein.

7. Gas generator according to Claim 6, **characterized in that** a central gas holding space chamber is provided as a gas outflow chamber (25), around which, as seen in cross section through the gas generator, at least one and preferably a plurality of gas holding space chambers (24) are arranged, and **in that** each gas holding space chamber (24) is flow-connected to the gas outflow chamber (25) via at least one gas outlet opening (27), so that the gas which is formed can flow between each reaction chamber (24) and the gas outflow chamber (25) into the gas outflow chamber (25) from a predetermined and preset reaction instant onwards.

8. Gas generator according to Claim 7, **characterized in that** the gas holding space (23) of the gas generator, based on the cross section, is divided into a plurality of segments of a circle, preferably into four circle segments of approximately equal size, as reaction chambers (24), which are separated from one another by chamber partitions as reaction chamber partitions.

9. Gas generator according to Claim 8, **characterized in that** at least one of the reaction chamber inner walls is coated, at least in regions, with the reducing agent (26).

10. Gas generator according to one of Claims 1 to 5, **characterized in that** the at least two gas holding space chambers as reaction chambers (3, 31) are connected one behind the other in the form of a series connection, in such a manner that when the gas generator is activated, first of all the oxidizing agent (11, 28) reacts with the reducing agent (8, 26), preferably by deflagration, in a first reaction chamber (3, 31), which is assigned at least one activation element, preferably an igniter, as reaction starter, and **in that** when a predetermined and preset reaction instant is reached, the gas formed in the first reaction chamber (3, 31) is allowed to flow through at least one associated chamber partition into at least one adjacent gas holding space chamber as second reaction chamber (3, 31) in order to start the reaction of the oxidizing agent (11, 28) with the reducing agent (8, 26) in this second reaction chamber (3, 31).

11. Gas generator according to Claim 10, **characterized in that** a multiplicity of adjacent reaction chambers (31) are provided, in such a form that the gas which is formed flows through at least one associated chamber partition between in each case at least two reaction chambers from a predetermined and preset reaction instant onwards, and in this way the reaction of the oxidizing agent with the reducing agent can be continued in the style of a chain reaction for each further adjacent reaction chamber.

12. Gas generator according to Claim 10 or 11, **characterized in that** the gas generator (2) is of cylindrical design, **in that** a plurality of, preferably three, reaction chambers (3) are arranged in succession in an axial orientation with respect to the cylindrical shape, **in that** the reaction chamber (3) arranged at a starting cylinder end (4) is assigned the at least one activation element, preferably an igniter (5), as reaction starter, **in that** a gas outflow chamber (14), out of which the gas which is formed can be blown via at least one gas outflow opening (15), is arranged at the opposite outflow cylinder end (13), adjacent to the last reaction chamber (3), and **in that** each reaction chamber (3) is closed off in as gastight a manner as possible with respect to the next adjacent chamber (3) by a reaction chamber partition (6) when the respective reaction is starting.

13. Gas generator according to one of Claims 10 to 12, **characterized in that** the reducing agent (8) is applied to one side of the reaction chamber partitions (6), in such a form that the reducing agent side is in each case assigned to the chamber (3) in which the reaction of the oxidizing agent (11) with the reducing agent (8) takes place first.

14. Gas generator according to one of Claims 10 to 13, **characterized in that** to form a defined volume in the reaction chambers (3) the reaction chamber partitions (6) are held at a defined distance from one another by means of at least one spacer (12).

15. Gas generator according to Claim 10 or 11, **characterized**
**in that** a central gas holding space chamber is provided as a gas outflow chamber (30), around which, as seen in cross section through the gas generator, at least two and preferably more gas holding space chambers (31) are arranged,
**in that** each gas holding space chamber, which is designed as a reaction chamber (31), is flow-connected to at least one adjacent reaction chamber (31) via at least one gas flow opening (32), in such a way that the gas which is formed is able to flow into the adjacent reaction chamber (31) from a predetermined and preset reaction instant onwards, and
**in that** the gas which is formed is allowed to flow into the gas outflow chamber (25) from the last reaction chamber, according to the time sequence of the chain reaction, from a predetermined and present reaction instant onwards.

16. Gas generator according to Claim 15, **characterized in that** the gas holding space (30) of the gas generator, based on the cross section, is divided into a plurality of segments of a circle, preferably into four circle segments of approximately equal size, as reaction chambers (31), which are separated from one another by chamber partitions as reaction chamber partitions.

17. Gas generator according to Claim 16, **characterized**
**in that** at least one of the reaction chamber inner walls of each reaction chamber (31) is coated, at least in regions, with the reducing agent (26).

18. Gas generator according to one of Claims 1 to 17, **characterized in that** the respective gas flow opening (32) and/or gas outlet opening (27) is closed off by a layer (29) of reducing agent in such a way that the gas can only pass through the opening after conversion of the reducing agent in this region which takes place during the course of the reaction.

19. Gas generator according to one of Claims 1 to 18, **characterized in that** the gaseous oxidizing agent (11, 21, 28) is nitrous oxide.

20. Gas generator according to one of Claims 1 to 19, **characterized in that** a liquid and/or solid oxidizing agent is provided in addition to the gaseous oxidizing agent (11, 21, 28).

21. Gas generator according to one of Claims 1 to 20, **characterized in that** the reducing agent (8, 20, 26), which is in the form of a solid, is flour.

22. Gas generator according to one of Claims 1 to 21, **characterized in that** the reducing agent (8, 20, 26) which is in the form of a solid, is adhesively bonded to the carrier (7, 29), preferably using starch.

23. Gas generator according to one of Claims 1 to 22, **characterized in that** the reducing agent (8, 20, 26) which is in the form of a solid is welded onto the carrier (7, 29).

## Revendications

1. Générateur de gaz, en particulier pour un dispositif de protection des occupants d'un véhicule, comportant au moins un agent oxydant gazeux (11, 21, 28) compris dans au moins un compartiment de gaz (1, 23, 30), dans lequel le compartiment de gaz (1, 23, 30) comprend aussi au moins un agent réducteur (8, 20, 26) sous forme solide, et dans lequel cet au moins un agent réducteur (8, 20, 26) est pourvu sous forme d'une couche réductrice, présentant une force de couche réductrice donnée, appliquée sur un support (7, 19, 29) dans le compartiment de gaz (1, 23, 30) et disposé au moyen du support (7, 19, 29) dans le compartiment de gaz (1, 23, 30) pour une combustion et une conversion de l'agent réducteur (8, 20, 26) complètes et sans résidus,
**caractérisé en ce que**
le compartiment de gaz (1, 23, 30) comporte plusieurs chambres dont au moins deux chambres de compartiment de gaz (3, 24, 31) et **en ce que**, dans le compartiment de gaz (1, 23, 30), au moins une cloison de séparation de chambres (6, 17) disposée entre deux chambres du compartiment de gaz (3, 24, 31) est constituée comme un support (7, 29) pour la couche réductrice.

2. Générateur de gaz selon la revendication 1, **caractérisé en ce que** le support (7, 19, 29) est constitué au moins partiellement par une cloison du compartiment de gaz et/ou **en ce que** le support (7, 19, 29) est intégré au moins partiellement dans la cloison du compartiment de gaz.

3. Générateur de gaz selon la revendication 1 ou 2, **caractérisé en ce que** le support est constitué d'une couche tissée (19) et/ou d'un feutre et/ou d'une couche formée de faisceaux de fibres et/ou d'une couche de mousse poreuse.

4. Générateur de gaz selon l'une des revendications 1 à 3, **caractérisé en ce que** le support (7) est constitué d'un élément diffuseur, préférablement d'un disque diffuseur (9, 18), ou comporte un tel élément, dans lequel est disposé au moins un orifice de décharge de gaz qui peut être traversé par le gaz produit.

5. Générateur de gaz selon l'une des revendications 1 à 4, **caractérisé en ce que**, lors d'une activation de la réaction de l'agent oxydant (11, 21, 28) avec l'agent réducteur (8, 20, 26) dans une chambre du compartiment de gaz fonctionnant comme chambre de réaction (3, 24, 31), la cloison de séparation de chambres (6, 17) sépare la chambre de réaction (3, 24, 31) de façon essentiellement étanche au gaz d'au moins une chambre du compartiment de gaz adjacente (3, 24, 31, 14, 25) jusqu'à un moment de réaction prédéterminé donné et libère, à partir du moment de réaction prédéterminé donné, un trop-plein du gaz produit depuis la chambre de réaction (3, 24, 31) dans la, au moins une, chambre du compartiment de gaz adjacente (3, 24, 31, 14, 25).

6. Générateur de gaz selon l'une des revendications 1 à 5, **caractérisé en ce que** les, au moins deux, chambres du compartiment de gaz sont disposées comme des chambres de réaction (24) selon un branchement en parallèle de telle sorte que, lors d'un activation du générateur de gaz dans toutes les chambres du compartiment de gaz (24) comprenant un agent réducteur, une réaction simultanée, préférablement par déflagration, de l'agent oxydant (28) avec l'agent réducteur (26) se produit et le gaz ainsi produit est déchargé à travers au moins un orifice d'échappement de gaz (27) présent dans chaque chambre du compartiment de gaz (24).

7. Générateur de gaz selon la revendication 6, **caractérisé en ce qu'**une chambre du compartiment de gaz centrale est constituée comme une chambre de décharge de gaz (25) autour de laquelle, vue en section transversale du générateur de gaz, au moins une et préférablement plusieurs chambres du compartiment de gaz (24) sont disposées et **en ce que** chaque chambre du compartiment de gaz (24) communique avec la chambre de décharge de gaz (25) au travers d'au moins un orifice d'échappement de gaz (27), de façon à ce qu'entre chaque chambre de réaction (24) et la chambre de décharge de gaz (25), à un moment donné prédéterminé de la réaction, un déversement du gaz produit dans la chambre de décharge de gaz (25) puisse se réaliser.

8. Générateur de gaz selon la revendication 7, **caractérisé en ce que** le compartiment de gaz (23) du générateur de gaz est, vu en section transversale, subdivisé en plusieurs segments de cercle, soit préférablement en quatre segments de cercle de taille environ identique, constituant des chambres de réaction (24) qui sont isolées les unes des autres par des cloisons de séparation de chambres constituant des cloisons de séparation de chambres de réaction.

9. Générateur de gaz selon la revendication 8, **caractérisé en ce qu'**au moins l'une des cloisons intérieures de chambre de réaction est au moins partiellement recouverte de l'agent réducteur (26).

10. Générateur de gaz selon l'une des revendications 1 à 5, **caractérisé en ce que** les, au moins deux, chambres du compartiment de gaz sont disposées comme des chambres de réaction (3, 31) selon un branchement en série l'une derrière l'autre, de telle sorte que, lors d'une activation du générateur de gaz, une réaction de l'agent oxydant (11, 28) avec l'agent réducteur (8, 26), préférablement par déflagration, se produit d'abord dans une première chambre de réaction (3, 31) comportant au moins un élément d'activation, soit préférablement un allumeur, constitué comme un dispositif d'amorçage de la réaction, et que, lorsqu'un moment prédéterminé donné de la réaction est atteint, le gaz produit dans la première chambre de réaction (3, 31) peut s'écouler à travers au moins une cloison de séparation de chambre disposée dans au moins une chambre du compartiment de gaz adjacente constituant une seconde chambre de réaction (3, 31) pour le démarrage de la réaction de l'agent oxydant (11, 28) avec l'agent réducteur (8, 26) dans cette deuxième chambre de réaction (3, 31).

11. Générateur de gaz selon la revendication 10, **caractérisé en ce qu'**une pluralité de chambres de réaction (31) adjacentes entre elles sont pourvues, de telle sorte qu'entre au moins deux chambres de réaction respectivement, le gaz produit puisse s'écouler à travers au moins une cloison de séparation de chambres associée à un moment donné prédéterminé de la réaction et qu'ainsi la réaction de l'agent oxydant avec l'agent réducteur puisse se propager sous forme d'une réaction en chaîne dans chacune des autres chambres de réaction adjacentes.

12. Générateur de gaz selon la revendication 10 ou 11, **caractérisé en ce que** le générateur de gaz (2) est construit sous forme cylindrique de telle sorte que plusieurs, soit préférablement trois, chambres de réaction (3) constituées dans la forme cylindrique sont disposées axialement l'une derrière l'autre, **en ce que** la chambre de réaction (3) disposée à une extrémité de démarrage du cylindre (4) comporte cet, au moins un, élément d'activation, soit préférablement un allumeur (5), sous forme d'un démarreur de réaction, **en ce qu'**à une extrémité opposée du cylindre de décharge (13) adjacente à la dernière chambre de réaction (3) une chambre de décharge de gaz (14) est disposée, d'où le gaz produit peut être expulsé à travers au moins un orifice de décharge de gaz (15), et **en ce que** chaque chambre de réaction (3) est isolée de façon aussi étanche vis-à-vis du gaz que possible par une cloison de séparation (6) de chambres de réaction par rapport à la chambre adjacente suivante (3) au démarrage de la réaction considérée.

13. Générateur de gaz selon l'une des revendications 10 à 12, **caractérisé en ce que** l'agent réducteur (8) est disposé sur une seule des faces des cloisons de séparation (6) des chambres de réaction, de telle sorte que la face de l'agent réducteur est chaque fois disposée dans la chambre (3) dans laquelle la réaction de l'agent oxydant (11) avec l'agent réducteur (8) se produit en premier.

14. Générateur de gaz selon l'une des revendications 10 à 13, **caractérisé en ce que**, pour la constitution d'un volume défini dans la chambre de réaction (3), les cloisons de séparation (6) des chambres de réaction sont maintenues en place les unes par rapport aux autres à une distance déterminée grâce à au moins une entretoise (12).

15. Générateur de gaz selon la revendication 10 ou 11, **caractérisé en ce qu'**une chambre centrale du compartiment de gaz est constituée comme une chambre de décharge de gaz (30) autour de laquelle, vue en section transversale du générateur de gaz, au moins deux et préférablement plusieurs chambres du compartiment de gaz (31) sont disposées, **en ce que** chaque chambre du compartiment de gaz, constituée comme une chambre de réaction (31), communique avec au moins une chambre de réaction adjacente (31) au travers d'au moins un orifice de déversement de gaz (32), de telle sorte qu'à un moment donné prédéterminé de la réaction, un déversement du gaz produit dans la chambre de réaction adjacente (31) puisse se réaliser et que, à un moment donné prédéterminé de la réaction, un déversement du gaz produit dans la chambre de décharge de gaz (25) puisse se réaliser hors de la dernière chambre de réaction, relativement au déroulement temporel de la réaction en chaîne.

16. Générateur de gaz selon la revendication 15, **caractérisé en ce que** le compartiment de gaz (30) du générateur de gaz est, vu en section transversale, subdivisé en plusieurs segments de cercle, soit préférablement en quatre segments de cercle de taille environ identique, constituant des chambres de réaction (31) qui sont isolées les unes des autres par des cloisons de séparation de chambres constituant des cloisons de séparation de chambres de réaction.

17. Générateur de gaz selon la revendication 16, **caractérisé en ce qu'**au moins une des cloisons internes de chambres de réaction dans chaque chambre de réaction (31) est recouverte au moins partiellement de l'agent réducteur (26).

18. Générateur de gaz selon l'une des revendications 1 à 17, **caractérisé en ce que** l'orifice de décharge de gaz (32) et/ou l'orifice d'échappement de gaz (27) respectifs sont obturés par une couche d'agent réducteur (29) de telle sorte que le transfert de gaz ne peut être effectué qu'après une transformation de l'agent réducteur effectuée à cet endroit au cours de la réaction.

19. Générateur de gaz selon l'une des revendications 1 à 18, **caractérisé en ce que** l'agent oxydant gazeux (11, 21, 28) est du protoxyde d'azote.

20. Générateur de gaz selon l'une des revendications 1 à 19, **caractérisé en ce que**, en plus de l'agent oxydant gazeux (11, 21, 28), un agent oxydant liquide et/ou solide est pourvu.

21. Générateur de gaz selon l'une des revendications 1 à 20, **caractérisé en ce que** l'agent réducteur (8, 20, 26) pourvu sous forme solide est une farine.

22. Générateur de gaz selon l'une des revendications 1 à 21, **caractérisé en ce que** l'agent réducteur (8, 20, 26) pourvu sous forme solide est collé, de préférence avec de l'amidon, sur le support (7, 29).

23. Générateur de gaz selon l'une des revendications 1 à 22, **caractérisé en ce que** l'agent réducteur (8, 20, 26) pourvu sous forme solide est soudé sur le support (7, 29).
